# EUROPÄISCHE PATENTANMELDUNG

(11) **EP 3 871 908 A1**
(43) Veröffentlichungstag der Anmeldung: **01.09.2021**
(21) Anmeldenummer: 21159311.6
(22) Anmeldetag: 25.02.2021
(51) Int. Cl.: B60D 1/24, B60D 1/62

(54) **ANHÄNGEVORRICHTUNG FÜR ZUGFAHRZEUGE**

(30) Priorität: 26.02.2020 DE 102020105001
(71) Anmelder: Lenz, Roland, 9733 Lind (AT)
(72) Erfinder: Lenz, Roland, 9733 Lind (AT)
(74) Vertreter: Limbeck, Achim

(57) **Zusammenfassung**

Die vorliegende Erfindung betrifft eine Anhängevorrichtung (10) zur Ankopplung von Anhängern an entsprechende Zugfahrzeuge (1), umfassend zumindest ein Kupplungsteil (100), welches mit einem entsprechend korrespondierdenen Kupplungselement (20) eines Anhängers (2) verbindbar ist. Die erfindungsgemäße Anhängevorrichtung (10) ist dadurch gekennzeichnet, dass das Kupplungsteil (100) an mindestens einer an dem Zugfahrzeug (1) vorgesehenen Führung (101) quer zur Längsrichtung des Zugfahrzeugs (1) verschiebbar ist, wobei besonders vorteilhaft vorgesehen ist, dass eine Steuerung Lenkbewegungen des Zugfahrzeuges (1) erfasst und die Position des Kupplungsteils (100) in Abhängigkeit der Lenkbewegungen automatisch einstellt.

## Beschreibung

### Technisches Gebiet

Die vorliegende Erfindung betrifft eine Anhängevorrichtung für Zugfahrzeuge wie bspw. Lastkraftwagen, Traktoren, Sattelzugmaschinen, Personenkraftwagen, Fahrräder, etc., gemäß dem Oberbegriff des Patentanspruchs 1. Als Zugfahrzeug sei darüber hinaus nachstehend jegliches ziehende Fahrzeug in einem Gespann mit einem Anhänger gemeint.

### Stand der Technik

Es sind aus dem Stand der Technik unterschiedlichste Anhängerkupplungen oder Anhängevorrichtungen bekannt, mit der ein Zugfahrzeug mit einem Anhänger verbunden werden kann. Je nach Art des Zugfahrzeuges und des Anhängers finden dabei in der Land- und Forstwirtschaft regelmäßig Bolzenkupplungen, bei Personenkraftwagen und Fahrrädern mit Hochdeichsel Kugelkopfkupplungen, Maulkupplungen bei Lastkraftwagen und Traktoren sowie Sattelkupplungen bei Sattelzügen Verwendung. Der Nachteil bekannter Anhängervorrichtungen besteht darin, dass diese starr und die dadurch vorgegebenen Kurvenradien ebenfalls unveränderlich sind. Gerade bei engen Kurvenverläufen bspw. im Stadtverkehr müssen Kurvenfahrten durch Gespanne durch zwei- oder mehrmaliges Vor und Zurückfahren bewältigt werden.

### Darstellung der Erfindung

Der vorliegenden Erfindung liegt die Aufgabe zugrunde, eine Anhängevorrichtung zu schaffen, die diese Nachteile ausräumt.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen der erfindungsgemäßen Anhängevorrichtung sind in den abhängigen Unteransprüchen angegeben.

Die erfindungsgemäße Anhängervorrichtung zur Ankopplung von Anhängern an entsprechende Zugfahrzeuge umfasst zumindest ein Kupplungsteil, welches mit einem entsprechend korrespondierdenen Kupplungselement eines Anhängers verbindbar ist.

Erfindungsgemäß ist eine Anhängevorrichtung der eingangs genannten Art dadurch gekennzeichnet, dass das mindestens eine Kupplungsteil an mindestens einer an dem Zugfahrzeug vorgesehenen Führung quer zur Längsrichtung des Zugfahrzeugs verschiebbar ist.

### Kurzbeschreibung der Zeichnungen

Weitere Ziele, Merkmale, Vorteile und Anwendungsmöglichkeiten der erfindungsgemäßen Anhängevorrichtung ergeben sich aus der nachfolgenden Beschreibung eines Ausführungsbeispiels anhand der Zeichnungen. Dabei bilden alle beschriebenen und/oder bildlich dargestellten Merkmale für sich oder in beliebiger Kombination den Gegenstand der Erfindung, unabhängig von der Zusammenfassung in einzelnen Ansprüchen oder deren Rückbeziehung.

In den Zeichnungen zeigen
Fig. 1 die erfindungsgemäße Anhängevorrichtung in einer schematischen Draufsicht mit einer Sattelkupplung;

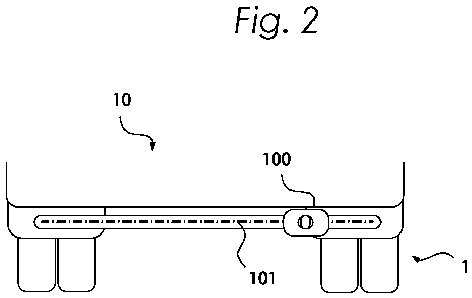

Fig. 2 die erfindungsgemäße Anhängevorrichtung in einer schematischen Rückansicht mit einer LKW-Anhängerkupplung;

### Ausführung der Erfindung

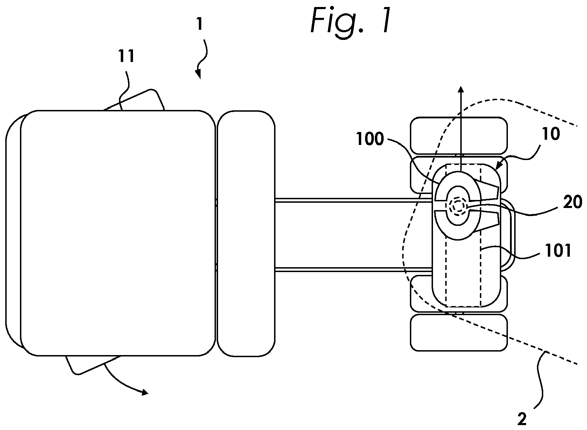

Wie aus Fig. 1 ersichtlich, ist die Führung 101 der erfindungsgemäßen Anhängervorrichtung 10 vorteilhafterweise aus mindestens einer Führungsschiene oder einem Gleitelement gebildet, an oder auf dem das Kupplungsteil 100 (hier eine Sattelkupplung) verschiebbar angeordnet ist. Die Führung 101 kann ferner aus zumindest einer Aufnahme gebildet sein, in dem mindestens ein Gleit- oder Rollelement an dem Kupplungselement 20 des Anhängers 2 aufgenommen ist.

In einer weiteren nicht dargestellten Ausführungsform der Erfindung kann die Führung 101 auch zumindest bereichsweise bogenförmig ausgebildet sein, um so eine noch bessere Anpassung an die Kurvenlage zu erreichen. Sofern sich eine solche Bogenform bspw. von der Mitte der Führung seitlich nach hinten oder vorne erstreckt, verlängert sich somit der Abstand zwischen Führerhaus 11 und Anhänger 2, was sich je nach Ausgestaltung der Kurve vorteilig auswirken kann. So wäre es in einer weiteren Ausbildung der Erfindung auch denkbar, dass sich die Führung in Seitenrichtung sowohl nach vorne als auch nach hinten bogenförmig erstreckt und dass je nach Kurvenausgestaltung das Kupplungsteil 100 entweder nach hinten, nach vorne oder einfach nur gerade geführt wird.

Das Kupplungsteil 100 ist in einer besonders vorteilhaften Ausführungsform der Erfindung motorisch verschiebbar. Hierzu kann ein Elektroantrieb (bspw. Ketten- oder Spindelzug, etc.), eine Hydraulik oder Pneumatik eingesetzt werden.

Hierzu kann es weiterhin vorteilhaft sein, eine Steuerung vorzusehen, mittels der die Position des Kupplungsteils 100 vorteilhafterweise automatisch und/oder durch den Fahrzeugführer einstellbar ist, wobei die Steuerung ein Bedienteil im Führerhaus 11 des Zugfahrzeuges 1 umfassen kann und/oder die Steuerung Lenkbewegungen des Zugfahrzeuges 1 erfasst und die Position des Kupplungsteils 100 in Abhängigkeit der Lenkbewegungen automatisch einstellt. Fig. 1 zeigt hierbei exemplarisch, wie das Kupplungsteil 100 mittels der Steuerung bei einer Kurvenfahrt in eine Linkskurve in Richtung der rechten Fahrzeughälfte des Zugfahrzeuges 1 verschoben wird.

Die Erfassung der Lenkbewegungen kann direkt über die Bewegung am Lenkrad, an den Achsen, über entsprechend Bewegungs- oder Lenksensoren oder andere geeignete Maßnahmen erfolgen.

Durch das seitliche Verschieben des Kupplungsteils 100 der Anhängevorrichtung 1 in der horizontalen Ebene kann der Kurvenradius des Anhängers 2 verändert werden und ein weites Ausholen der Zugfahrzeuges ist mithin nicht mehr zwingend notwendig bzw. wird ein solches Manöver dadurch wirksam reduziert. Bei engen Straßen wird das Zurückschieben vereinfacht, da der Anhänger 2 mittels der erfindungsgemäßen Anhängevorrichtung 1 quasi separat gelenkt werden kann.

Die erfindungsgemäße Anhängevorrichtung 1 beschränkt sich in ihrer Ausführung nicht auf die vorstehend angegebenen bevorzugten Ausführungsformen. Vielmehr sind eine Vielzahl von Ausgestaltungsvariationen denkbar, welche von der dargestellten Lösung auch bei grundsätzlich anders gearteter Ausführung Gebrauch machen.

### Liste der Bezugsziffern

- 1: Zugfahrzeug
- 2: Anhänger
- 10: Anhängevorrichtung
- 11: Führerhaus
- 20: Kupplungselement am Anhänger
- 100: Kupplungsteil an der Anhängevorrichtung
- 101: Führung

## Patentansprüche

1. Anhängevorrichtung (10) zur Ankopplung von Anhängern an entsprechende Zugfahrzeuge (1), umfassend zumindest ein Kupplungsteil (100), welches mit einem entsprechend korrespondierdenen Kupplungselement (20) eines Anhängers (2) verbindbar ist,
**dadurch gekennzeichnet, dass**
das Kupplungsteil (100) an mindestens einer an dem Zugfahrzeug (1) vorgesehenen Führung (101) quer zur Längsrichtung des Zugfahrzeugs (1) verschiebbar ist.

2. Anhängevorrichtung (1) nach Anspruch 1,
**dadurch gekennzeichnet, dass**
die Führung (101) aus mindestens einer Führungsschiene oder einem Gleitelement gebildet ist, an oder auf dem das Kupplungsteil (100) verschiebbar angeordnet ist.

3. Anhängevorrichtung (1) nach Anspruch 1 oder 2,
**dadurch gekennzeichnet, dass**
die Führung (101) aus zumindest einer Aufnahme gebildet ist, in dem mindestens ein Gleit- oder Rollelement an dem Kupplungselement (20) des Anhängers (2) aufgenommen ist.

4. Anhängevorrichtung (1) nach einem der vorangegangenen Ansprüche,
**dadurch gekennzeichnet, dass**
das Kupplungsteil (100) motorisch verschiebbar ist.

5. Anhängevorrichtung (1) nach Anspruch 4,
**dadurch gekennzeichnet, dass**
eine Steuerung vorgesehen ist, mittels der die Position des Kupplungsteils (100) einstellbar ist.

6. Anhängevorrichtung (1) nach Anspruch 5,
**dadurch gekennzeichnet, dass**
die Steuerung ein Bedienteil im Führerhaus (11) des Zugfahrzeuges (1) umfasst.

7. Anhängevorrichtung (1) nach einem der vorangegangenen Ansprüche,
**dadurch gekennzeichnet, dass**
die Führung (101) zumindest bereichsweise bogenförmig ausgebildet ist.

8. Verfahren zur Steuerung einer Anhängevorrichtung (1) nach einem der vorangegangenen Ansprüche 5 und 6,
**dadurch gekennzeichnet, dass**
die Steuerung Lenkbewegungen des Zugfahrzeuges (1) erfasst und die Position des Kupplungsteils (100) in Abhängigkeit der Lenkbewegungen automatisch einstellt.
